# EUROPEAN PATENT SPECIFICATION

(11) **EP 0 414 311 B1**
(45) Date of publication and mention of the grant of the patent: **05.04.1995**
(21) Application number: 90202224.3
(22) Date of filing: 20.08.1990
(51) Int. Cl.: H04N 5/44

(54) **Picture display device and video signal processing circuit**
Bildwiedergabeanordnung und Videosignalverarbeitungsschaltung
Dispositif de reproduction d'images et circuit de traitement de signaux vidéo

(30) Priority: 22.08.1989 NL 8902113
(43) Date of publication of application: 27.02.1991
(73) Proprietor: Philips Electronics N.V., 5621 BA Eindhoven (NL)
(72) Inventor: Van der Voort, Victor Henricus Julianus, NL-5656 AA Eindhoven (NL); Boekhorst, Frederick Maria, NL-5656 AA Eindhoven (NL)
(74) Representative: Steenbeek, Leonardus Johannes

(56) References cited:
- NL-A- 8 700 058
- US-A- 4 760 455

## Description

The invention relates to a picture display device for displaying pictures having a first aspect ratio and pictures having a second aspect ratio on a display screen having the first aspect ratio, comprising means for applying a signal to pixels which are not associated with the second aspect ratio picture when a second aspect ratio picture is being displayed. Aspect ratio is herein understood to mean the ratio between the width and the height of the picture.

A picture display device of this type is known from NL-A-8700058. When a picture having a second aspect ratio is displayed in this known picture display device, a signal is applied to the other portions of the screen for each line, resulting in a luminance which is equal to the average luminance of the line of the picture. The picture is displayed in an undistorted form in this way and there will be no sharp transitions in the ageing of the display screen or of the display elements (in projection television).

A drawback of this known picture display device is that the edges of the picture, the side panels, with an average luminance per line have a disturbing effect for the user of the picture display device.

One of the objects of the invention is to obviate the said drawback. To this end, a first aspect of the invention provides a picture display device as defined in claim 1. Advantageous embodiments are defined in the dependent claims.

This provides the possibility of covering the pixels which do not belong to the picture to be displayed so that the side panels, which have a given luminance, are not visible to the user. The video signal processing circuit provides the simple possibility of preventing an uneving ageing of the display screen when a picture of the second aspect ratio, for example 4 : 3 is displayed. This is achieved by repeating the extreme pixel of each line of the 4 : 3 picture on the side panels. As a result there can never be a transition in ageing between the edge of the 4 : 3 picture and the side panels.

It has to be noted that US-A-4,760,455 (Figs. 6-8) already discloses a picture output device for displaying pictures of two different aspect ratios, having an output picture masking device for masking those parts of the display screen which are not used upon display of a picture having an aspect ratio different from that of the display screen. However, this document does not show a video signal processing circuit which furnishes the luminance of the first and last pixel of a line to the left and right unused portions, respectively, of the display screen.

A further embodiment of a picture display device according to the invention is characterized in that it is adapted to operate the cover means by means of a control signal which is an aspect ratio identification signal transmitted along with the picture. This provides the possibility of automatically covering the side panels of the display screen when a picture having the second aspect ratio is being displayed.

Another embodiment of a picture display device according to the invention is characterized in that the cover means comprise at least one cover plate consisting of a plurality of parts which are pivotably interconnected. Since the cover plates are pivotably interconnected, they occupy less space than cover plates which are formed as one assembly.

In this application, luminance is understood to mean the light intensity (either with monochrome or color display) on the display screen. A dual port memory is understood to mean a memory which can read and write simultaneously. This memory may also be replaced by two single port memories.

These and other aspects of the invention will now be described in greater detail by way of example with reference to the accompanying drawings in which

Fig. 1a shows an embodiment of a picture display device according to the invention and Fig. 1b shows a detail of this picture display device.

Fig. 2 shows a circuit for use in a picture display device according to the invention in which a 50 to 100 Hz conversion is also realised.

Fig. 3 shows a 16 : 9 display screen on which a 4 : 3 picture is displayed with the side panels being filled in.

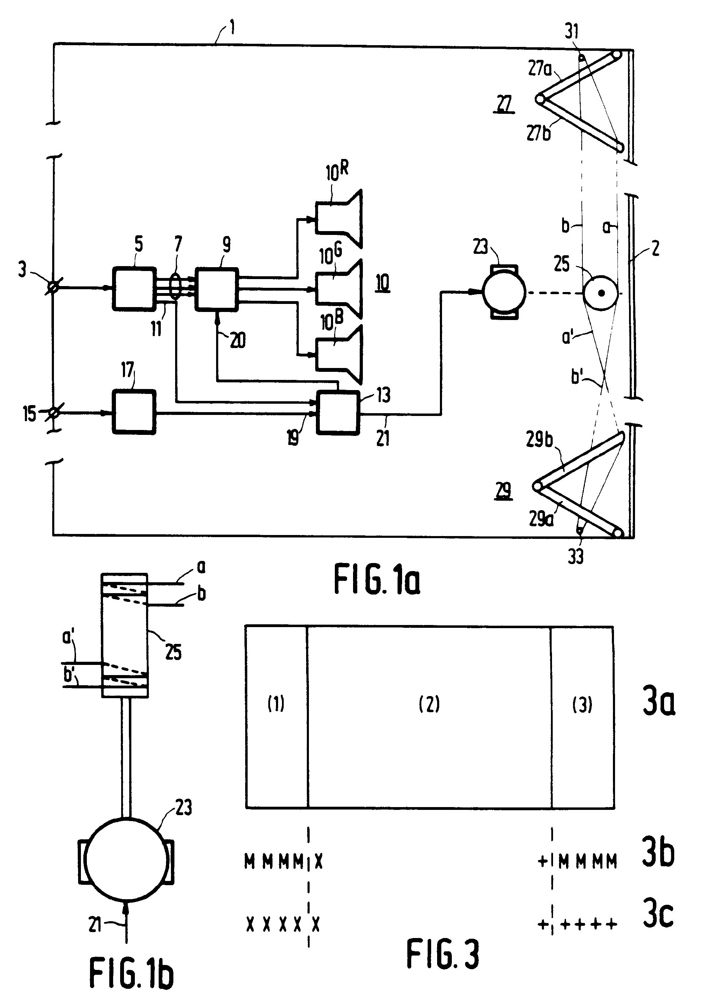

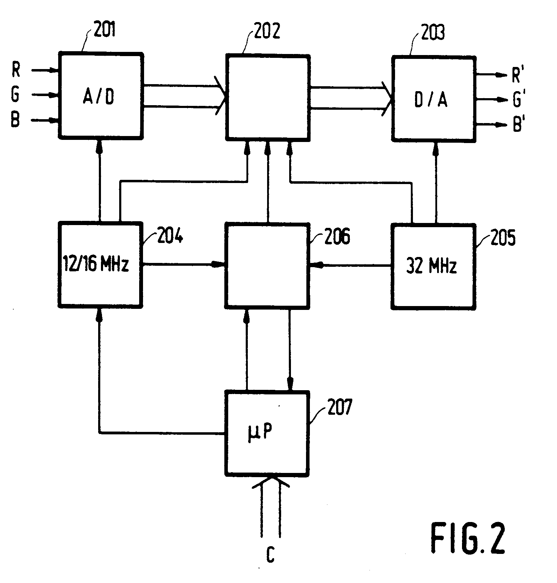

Fig. 1a shows an embodiment of a picture display device according to the invention in the form of a projection device. In this case the picture display device 1 has a display screen 2 with an aspect ratio of 16 : 9. A first input 3 is coupled to a decoding circuit 5 in which the incoming video signal is decoded and is applied in a decoded form to a video signal processing circuit 9 via a triple connection 7. This video signal processing circuit, which will be described in greater detail with reference to Fig. 2, supplies three signals to the three display elements 10R, 10G and 10B.

When a 4 : 3 picture is displayed on the 16 : 9 picture display device, uneven ageing of the display elements, on the portions of the screen not associated with the 4 : 3 picture, the side panels, is prevented in that a signal resulting in a given suitable luminance is generated. To render these signals displayed on the side panels invisible to the user, these side panels are covered with cover plates (27, 29) in this embodiment. These cover plates may be formed in different manners. One of the possibilities is that on both sides of the display screen a cover plate is pivotably connected to the side of the display screen. When the 4 : 3 picture is being displayed, the side panels are covered, for example under the control of a motor 23 as will be further described. To save space, it is alternatively possible to form the plate from a plurality of portions which are pivotably interconnected. This method is used in this embodiment.

A cover control circuit 13 supplies an aspect ratio signal 20 to the video signal processing circuit and also supplies a control signal 21 driving the motor 23. The motor is coupled to a shaft 25. This shaft is coupled to the two cover plates 27 and 29 via wires. The cover plate 27 has two portions 27a and 27b which are pivotably interconnected. The side of the portion 27a which is not connected to the portion 27b is connected to a side of the display screen 2. The side of the portion 27b which is not connected to the portion 27a is connected to the shaft 25 via a wire a. This portion is also connected to the shaft 25 via a wire b extending via a pawl 31. The wires a and b may be interconnected and thus form one wire, see also Fig. 1b which shows the shaft 25 with the wires in detail. The other cover plate 29 is connected to the shaft 25 through a similar construction. This cover plate has also two portions 29a and 29b and is connected to the shaft 25 via wires a′ and b′ and a pawl 33, see also Fig. 1b.

If the incoming video signal comprises an aspect ratio identification signal, such as, for example in MAC/PACKET signals, the decoding circuit 5 supplies a signal at a second output 11 to the cover control circuit 13, dependent on the aspect ratio. This cover control circuit controls the coverage of the side panels of the display screen when a 4 : 3 picture is being displayed. In addition, or instead, if the signal received by the decoding circuit does not comprise an aspect ratio identification signal, the user can cover the side panels via an operating input 15 of the display device 1 and a video operating circuit 17 via a second input 19 of the cover control circuit 13 when a 4 : 3 picture is being displayed and uncover the side panels for irradiation by the display elements 10 when a 16 : 9 picture is being displayed. It is alternatively possible to operate the cover plates electromagnetically instead of being driven by the motor.

Fig. 2 shows a circuit for use in a picture display device according to the invention. This circuit is part of, for example, the video signal processing circuit 9 of Fig. 1 and also realises a 50 to 100 Hz conversion. The circuit receives input signals R, G and B (or Y, U and V) at three inputs at a field frequency of 50 Hz. These input signals are converted into digital signals in an A/D converter 201. Subsequently these digital signals are applied to a so-called dual port memory 202 (as is known, a dual port memory is understood to mean a memory which can read and write simultaneously). Instead of a dual port memory it is alternatively possible to use two memories in which the one memory writes a first field when the other memory reads a second field, and conversely. The dual port memory is controlled by two clocks, a first clock 204 having a frequency of 12 or 16 MHz and a second clock 205 having a frequency of 32 MHz, which is required in connection with the 50 to 100 Hz conversion.

The dual port memory is further controlled by a memory control circuit 206 which generates digital switching signals at the picture frequency for the memory control. The clocks 204 and 205 also control the memory control circuit 206. This memory control circuit is interactively controlled by a microprocessor 207 which in turn is controlled by control signals C from other portions (not shown) of the picture display device (the microprocessor receives, inter alia , the aspect ratio identification signal from the cover control circuit 13). The microprocessor also controls the 12/16 MHz clock 204 and when a 16 : 9 picture is being displayed, the clock is set at 16 MHz and when a 4 : 3 picture is being displayed, the clock is set at 12 MHz.

When displaying a 16 : 9 picture, the signals are written at a frequency of 16 MHz and read at a frequency of 32 MHz. This results in either a doubling of the line number or a doubling of the field number. When a 4 : 3 picture is displayed on the 16 : 9 display screen, it is necessary to perform a compression which is achieved by writing at a frequency of 12 MHz and reading at a frequency of 16 MHz. To obtain the line number doubling or the field number doubling also when the 4 : 3 picture is displayed, the 4 : 3 picture is read at a frequency of 32 MHz. The 12/16 MHz clock controls the A/D converter 201 and the 32 MHz clock controls a D/A converter 203. This D/A converter receives the processed video signal from the dual port memory 202 and supplies output signals (R′, G′ and B′) at a field frequency of 100 Hz or with 1250 lines.

When a 4 : 3 picture is displayed on the 16 : 9 display screen, a luminance can be generated on the side panels so that there is no difference in ageing on the side panels of the display elements as compared with the 4 : 3 picture. According to a further aspect of the invention this luminance is obtained by repeating the first pixel of each line for the left-hand side panel and the last pixel of each line for the right-hand side panel. The dual port memory has tri-state outputs. The tri-state outputs have the property that the value of the output will decrease only slowly at the instant when the control signal is removed from the memory if the value of the output is high (digital "1"). The value of the output will have reached the level halfway between the digital high ("1") and the digital low ("0") only after approximately 100 microsec. Similarly as the value of the output is low (digital "0") at the instant when the control signal is removed from the memory, the value of the output will slowly increase. Now again the value of the output will have reached the level halfway between the digital high and the digital low after approximately 100 microsec. This property is utilized to fill in the side panels. At the start of scanning the pixels, the first pixel of the line is read from the memory 202. After the first pixel has been read, reading is stopped by means of the memory control circuit under the control of the microprocessor. As described hereinbefore, the outputs of the dual port memory retain the value for a certain period. A period of approximately 3 microsec is required for filling up the side panel. After this period the memory is further read until the last pixel of the relevant line and now again the outputs of the dual port memory retain the value for a certain period. In this way the right-hand side panel is also filled up. By retaining the first and the last pixel it is achieved that there is no longer any transition in ageing between the 4 : 3 picture and the side panels. If the 50 to 100 Hz conversion (line number doubling or field number doubling) is not required, the frequency of the clock 205 will be 16 MHz. It is alternatively possible to replace the A/D converter 201, the dual port memory 202 and the D/A converter 203 by an analog dual port line memory.

Fig. 3a shows the composition of the display screen. For displaying a 4 : 3 picture on the 16 : 9 display screen the first pixel is read for the portion to the left of the 4 : 3 picture (1), as described above, and it is subsequently retained (by means of the tri-state outputs of the memory), whereafter the 4 : 3 picture (2) is displayed. The last pixel is also repeated at the right-hand side of the picture (3) by using the said tri-state outputs.

Fig. 3b shows the situation as described in the said Netherlands Patent Application in which the average picture information (M) is displayed per line on the side panels. Fig. 3c shows the novel situation in which for each line the picture information of the first and last pixels of the 4 : 3 picture is displayed on the side panels (x and +, respectively).

By a repeated reading of the memory 202 it would of course also have been possible to fill up the side panels by repeating portions of the 4 : 3 picture.

It is alternatively possible to cover the side panels with an LCD panel when a 4 : 3 picture is displayed on a 16 : 9 picture display device. In order that no transition is observed between the side panels and the central portion of the screen when displaying 16 : 9 pictures, the full screen will preferably be provided with an LCD panel and only its side panels will be rendered opaque under the control of, for example the aspect ratio identification signal when 4 : 3 pictures are displayed. A drawback of this method is that in any case half the light intensity is lost. Moreover, large LCD panels are required for this solution.

## Claims

1. A picture display device (1) for displaying pictures having a first aspect ratio ( (1) + (2) + (3) ) and pictures having a second aspect ratio ( (2) ) on a display screen having the first aspect ratio ( (1)+(2)+(3) ), comprising means (9) for applying a signal to pixels ( (1)+(3) ) which are not associated with the second aspect ratio picture ( (2) ) when a second aspect ratio picture is being displayed, characterized in that the picture display device (1) further comprises:
adjustable cover means (27, 29) for covering said pixels ( (1)+(3) ) when the picture having the second aspect ratio ((2)) is being displayed and for uncovering said pixels ( (1)+(3) ) when a picture having the first aspect ratio ( (1)+(2)+(3) ) is being displayed; and
a video signal processing circuit (9) for furnishing, upon display of the picture having the second aspect ratio ( (2) ), to said pixels ( (1)+(3) ) of the screen which are not associated with the picture ( (2) ), substantially the same luminance as an extreme pixel of a line of the picture.

2. A picture display device as claimed in Claim 1, characterized in that it is adapted to operate the cover means (27, 29) by means of a control signal.

3. A picture display device as claimed in Claim 2, characterized in that the control signal for automatically operating the cover means (27, 29) is an aspect ratio identification signal transmitted along with the picture.

4. A picture display device as claimed in Claim 1, 2 or 3, characterized in that the cover means (27, 29) comprise at least one cover plate (27) having a plurality of parts (27a,27b) which are pivotably interconnected.

5. A picture display device as claimed in Claim 1, characterized in that the video signal processing circuit (9) comprises means (202, 206, 207) for applying a signal to a portion to the left of the picture which signal provides a luminance substantially corresponding to a luminance of a first pixel (x) of a line and for applying a signal to a portion to the right of the picture, which signal provides a luminance substantially corresponding to a luminance of a last pixel (+) of the line.

6. A picture display device as claimed in Claim 5, characterized in that the applying means comprise a memory (202) and means (206, 207) for stopping reading from the memory (202) after reading said first (x) or said last pixel (+), respectively, for a predetermined time period corresponding to said pixels ( (1)+(3) ) of the screen which are not associated with the displayed picture ( (2) ).

## Patentansprüche

1. Bildwiedergabeanordnung (1) zum Wiedergeben von Bildern mit einem ersten Seitenverhältnis ((1)+(2)+(3)) und von Bildern mit einem zweiten Seitenverhältnis ((2)) an einem Wiedergabeschirm mit dem ersten Seitenverhältnis ((1)+(2)+(3)), mit Mitteln (9) zum Zuführen eines Signals zu Pixeln ((1)+(3)), die nicht dem zweiten Seitenverhältnisbild ((2)) zugeordnet sind, wenn ein Bild mit dem zweiten Seitenverhältnis wiedergegeben wird, dadurch gekennzeichnet, daß die Bildwiedergabeanordnung (1) weiterhin die nachfolgenden Mittel aufweist:
einstellbare Abdeckmittel (27, 29) zum Bedecken der genannten Pixel ((1)+(3)), wenn das Bild mit dem zweiten Seitenverhältnis ((2)) wiedergegeben wird und zum Freigeben der genannten Pixel ((1)+(3)), wenn ein Bild mit dem ersten Seitenverhältnis ((1)+(2)+(3)) wiedergegeben wird; und
eine Videosignalverarbeitungsschaltung (9) zum Liefern bei Wiedergabe des Bildes mit dem zweiten Seitenverhältnis ((2)) zu den genannten Pixeln ((1)+(3)) des Schirms, das nicht dem Bild ((2)) zugeordnet ist, im wesentlichen derselben leuchtdichte wie zu einem extremen Pixel einer Zeile des Bildes.

2. Bildwiedergabeanodnung nach Anspruch 1, dadurch gekennzeichnet, daß sie mittels eines Steuersignals die Abdeckmittel (27, 29) betätigen kann.

3. Bildwiedergabeanordnung nach Anspruch 2, dadurch gekennzeichnet, daß das Steuersignal zur automatischen Batätigung der Abdeckmittel (27, 29) ein zusammen mit dem Bild übertragenes Seitenverhältniskennsignal ist.

4. Bildwiedergabeanordnung nach Anspruch 1, 2 oder 3, dadurch gekennzeichnet, daß die Abdeckmittel (27, 29) wenigstens eine Abdeckplatte (27) mit einer Anzahl gelenkig miteinander verbundener Teile (27a, 27b) aufweist.

5. Bildwiedergabeanordnung nach Anspruch 1, dadurch gekennzeichnet, daß die Videosignalverarbeitungsschaltung (9) Mittel (202, 206, 207) aufweist zum Zuführen eines Signals zu einem Teil auf der linken Seite des Bildes, wobei dieses Signal eine Leuchtdichte schafft, die einer Leuchtdichte eines ersten Pixels (x) einer Zeile nahezu entspricht und zum Zuführen eines Signals zu einem Teil auf der rechten Seite des Bildes, wobei dieses Signal eine Leuchtdichte schafft, die einer Leuchtdichte eines letzten Pixels (+) der Zeile nahezu entspricht.

6. Bildwiedergabeanordnung nach Anspruch 5, dadurch gekennzeichnet, daß die Zuführungsmittel einen Speicher (202) und Mittel (206, 207) aufweisen zum Beenden des Auslesens des Speichers (202) nach dem Auslesen des genannten ersten (x) oder letzten (+) Pixels während einer vorbestimmten Zeit entsprechend den genanten Pixeln ((1)+(3)) des Schirms, die dem wiedergegebenen Bild (2) nicht zugeordnet sind.

## Revendications

1. Dispositif d'affichage d'images (1) pour afficher des images ayant un premier format [(1)+(2)+(3)] et des images ayant un deuxième format [(2)] sur un écran d'affichage ayant le premier format [(1)+(2)+(3)], comprenant des moyens (9) pour appliquer un signal aux pixels [(1)+(3)] qui ne sont pas associés à l'image du deuxième format [(2)] lorsqu'une image du deuxième format est affichée, caractérisé en ce que le dispositif d'affichage d'images (1) comprend, en outre :
des moyens de recouvrement ajustables (27, 29) pour recouvrir lesdits pixels [(1)+(3)] lorsqu'une image du deuxième format [(2)] est affichée et pour découvrir lesdits pixels [(1)+(3)] lorsqu'une image du premier format [(1)+(2)+(3)] est affichée, et
un circuit de traitement des signaux vidéo (9) pour fournir, lors de l'affichage de l'image du deuxième format [(2)], auxdits pixels [(1)+(3)] de l'écran qui ne sont pas associés à l'image [(2)], sensiblement la même luminance qu'un pixel extrême d'une ligne de l'image.

2. Dispositif d'affichage d'images selon la revendication 1, caractérisé en ce qu'il est à même de faire fonctionner les moyens de recouvrement (27, 29) à l'aide d'un signal de commande.

3. Dispositif d'affichage d'images selon la revendication 2, caractérisé en ce que le signal de commande permettant de faire fonctionner automatiquement les moyens de recouvrement (27, 29) est un signal d'identification de format transmis avec l'image.

4. Dispositif d'affichage d'images selon la revendication 1, 2 ou 3, caractérisé en ce que les moyens de recouvrement (27, 29) comprennent au moins une plaque de recouvrement (27) comportant une pluralité de parties (27a, 27b) qui sont articulées les unes aux autres.

5. Dispositif d'affichage d'images selon la revendication 1, caractérisé en ce que le circuit de traitement de signaux vidéo (9) comprend des moyens (202, 206, 207) pour appliquer un signal à une partie vers la gauche de l'image, ledit signal fournissant une luminance correspondant sensiblement à une luminance d'un premier pixel (x) d'une ligne, et pour appliquer un signal à une partie vers la droite de l'image, ledit signal fournissant une luminance correspondant sensiblement à une luminance d'un dernier pixel (+) de la ligne.

6. Dispositif d'affichage d'images selon la revendication 5, caractérisé en ce que les moyens d'application comprennent une mémoire (202) et des moyens (206, 207) pour arrêter l'extraction de la mémoire (202) après lecture dudit premier pixel (x) ou dudit dernier pixel (+), respectivement, pendant une période de temps prédéterminée correspondant auxdits pixels [(1)+(3)] de l'écran qui ne sont pas associés à l'image affichée [(2)].
